# FASCICULE DE BREVET EUROPEEN

(11) **EP 1 566 068 B1**
(45) Date de publication et mention de la délivrance du brevet: **16.08.2006**
(21) Numéro de dépôt: 03786056.6
(22) Date de dépôt: 13.11.2003
(51) Int. Cl.: H04Q 7/32

(54) **CHARGEMENT D'UNE APPLICATION A DEPLOYER DANS UN TERMINAL ET UNE CARTE A PUCE**
LADEN EINER IN EINEM TERMINAL UND IN EINER CHIPKARTE EINZUSETZENDEN ANWENDUNG
LOADING OF AN APPLICATION THAT IS TO BE DEPLOYED IN A TERMINAL AND A CHIP CARD

(30) Priorité: 14.11.2002 FR 0214276
(43) Date de publication de la demande: 24.08.2005
(73) Titulaire: GEMPLUS, 13420 Gémenos (FR)
(72) Inventeur: CRICCO, Rémy, 13013 Marseille (FR); GUILLAUD, Christophe, 13011 Marseille (FR)
(86) Numéro de dépôt international: PCT/FR2003/050120
(87) Numéro de publication internationale: WO 2004/047473

(56) Documents cités:
- FR-A- 2 805 912
- US-A- 6 023 620
- US-A1- 2002 116 513
- Z. STEVE JIN ; JOHN D. MITCHELL: "Java Tip 120: Execute self-extracting JARs ( Create easy-to-use, cross-platform Java Archives)" JAVA WORLD, [Online] 16 novembre 2001 (2001-11-16), XP002245316 Extrait de l'Internet: URL:http://www.javaworld.com/javatips/jw-j avatip120_p.html> [extrait le 2003-06-24]
- RAMON CASHA: "Self-extracting Archive HOWTO" MALTA LINUX USER GROUP, [Online] 15 mars 2002 (2002-03-15), XP002245317 Extrait de l'Internet: URL:http://linux.org.mt/article/selfextrac t> [extrait le 2003-06-24]

## Description

La présente invention concerne le chargement d'une application à déployer, dite également application à distribuer, dans un terminal et une carte à puce, dite également carte à microcontrôleur ou carte à circuit intégré.

Le terminal accueille la carte à puce et peut être selon un exemple préféré un terminal radiotéléphonique mobile pour lequel la carte à puce est un module d'identité d'usager amovible SIM (Subscriber Identity Module), auquel on se référera dans la suite de la description. Selon d'autres exemples, le terminal peut être un terminal bancaire accueillant une carte de débit ou de crédit, ou un ordinateur personnel (PC) doté d'un lecteur de carte à puce, ou bien un petit équipement communiquant tel qu'un assistant numérique personnel (PDA) pouvant lire une carte à puce introduite dans celui-ci.

L'invention concerne ainsi d'une manière générale un terminal ouvert dans lequel est implémenté un système d'exploitation ouvert qui autorise un téléchargement dynamique d'applications additionnelles "au-dessus" du système d'exploitation partiellement dans une carte à puce accueillie dans le terminal.

Le document FR-A-2805912 décrit l'exécution par une carte à puce d'un téléphone mobile d'instructions stockées dans un serveur distant. Le document US-A-6023620 décrit le téléchargement de la mise à jour d'une application vers un téléphone mobile.

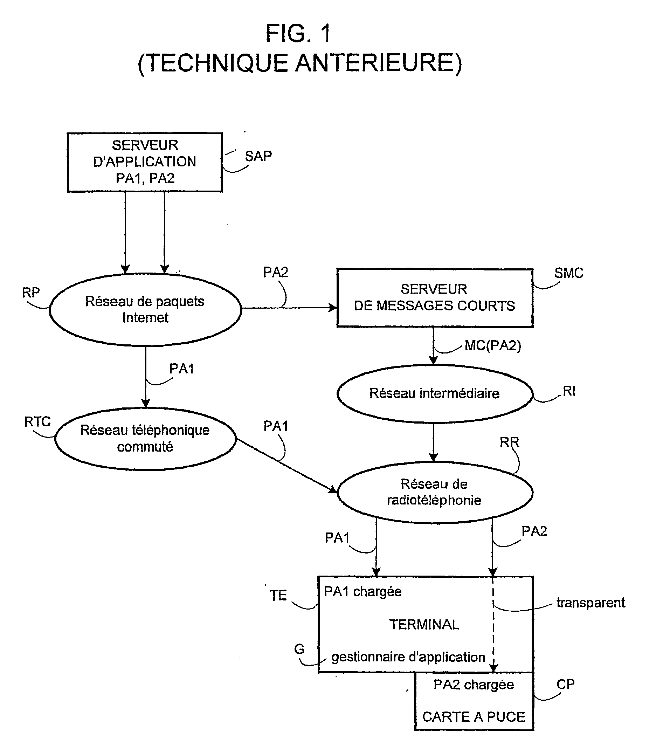

En se référant à la figure 1, on a représenté les principales entités pour télécharger une application composée d'une première partie PA1 et d'une deuxième partie PA2 depuis une plate-forme OTA (Over The Air) telle qu'un serveur d'application SAP vers un terminal radiotéléphonique mobile TE contenant une carte à puce amovible CP du type carte SIM. Le terminal TE ainsi que la carte à puce CP contiennent chacun un interpréteur du type machine virtuelle Java ou Microsoft (marques enregistrées). En particulier, le terminal inclut un gestionnaire de carte G pour gérer les échanges de données entre le monde extérieur au terminal TE et la carte à puce CP.

Le serveur d'application SAP est géré par exemple par un fournisseur d'application pour terminaux mobiles et opère de la manière suivante pour télécharger une application composée des parties PA1 et PA2.

La première partie PA1 destinée à être chargée dans le terminal TE est téléchargée à travers un réseau de paquets du type internet RP, un réseau téléphonique commuté RTC et le réseau de radiotéléphonie RR auquel appartient le terminal TE. Le téléchargement de la première partie d'application PA1 est effectuée avec un débit élevé, typiquement de 9600 bits/s, notamment à travers un canal de trafic du réseau de radiotéléphonie RR. La partie PA1 est installée et gérée par un gestionnaire d'application G implémenté dans le terminal.

La deuxième partie d'application PA2 destinée à la carte à puce CP ne peut être téléchargée que par l'intermédiaire de messages courts MC dont le débit est faible, de quelques centaines de bits par seconde, et donc très inférieur au débit pour télécharger la première partie d'application PA1. Ainsi, la deuxième partie d'application PA2 transite à travers le réseau de paquets RP, un serveur de messages courts SMC générant généralement plusieurs messages courts MC segmentant la partie d'application PA2 transmis directement ou à travers un réseau intermédiaire RI du type RNIS ou X.25 vers le réseau de radiotéléphonie RR, puis à travers le terminal TE qui est transparent à la partie d'application PA2.

La séparation de l'application en deux parties PA1 et PA2 à travers des chemins de transmission différents RP-RTC-RR et RP-SMC-RI-RR entraîne naturellement une désynchronisation des parties d'application effectivement téléchargées séparément dans le terminal TE et la carte à puce CP. Puisque les téléchargements sont effectués séparément, le terminal TE et la carte à puce CP accusent réception d'une manière séparée et non simultanée du téléchargement des parties PA1 et PA2 au serveur SAP avant de commencer toute exécution de l'application [PA1, PA2] dans l'ensemble terminal TE et carte à puce CP. En particulier, le gestionnaire d'application G doit attendre que la deuxième partie d'application PA2 soit complètement téléchargée audit débit faible dans la carte CP pour décider d'une exécution de l'application.

L'invention a pour principal objectif de remédier aux inconvénients dus à la désynchronisation des chargements des deux parties d'application selon la technique antérieure. Elle vise plus particulièrement à fournir un mécanisme de synchronisation au terminal pour qu'il charge lui-même la deuxième partie de l'application distribuée tout en ayant reçu rapidement les deux parties de l'application avec un débit nettement plus élevé que celui offert par une transmission de messages courts. Si nécessaire le terminal ne transmet qu'un seul message d'acquittement après l'installation de l'application dans le terminal et la carte à puce.

Pour atteindre cet objectif, un procédé pour charger depuis un serveur une application incluant une première partie destinée à un terminal doté d'un moyen gestionnaire d'application et une deuxième partie destinée à une carte à puce accueillie dans le terminal, est caractérisé en ce qu'il comprend les étapes de :
- fournir au terminal un moyen de chargement pour charger la deuxième partie d'application dans la carte à puce,
- formater dans le serveur la deuxième partie d'application pour qu'elle soit compatible avec un protocole de communication entre le terminal et la carte à puce,
- construire dans le serveur un message d'application contenant la première partie d'application et la deuxième partie d'application formatée,
- transmettre le message d'application depuis le serveur vers le terminal à travers un unique canal de transmission,
- installer dans le terminal la première partie d'application extraite du message d'application par le moyen gestionnaire, et
- charger la deuxième partie d'application extraite du message d'application depuis le terminal dans la carte à puce selon le protocole de communication prédéterminé sous la commande du moyen de chargement.

L'invention s'affranchit ainsi du problème de désynchronisation des chargements des première et deuxième parties de l'application puisque toutes les deux sont installées respectivement dans le terminal et la carte à puce sous la commande du moyen gestionnaire d'application et du moyen de chargement implémentés dans le terminal. Aucun moyen supplémentaire pour gérer la transmission simultanée des deux parties d'application dans un message d'application commun n'est nécessaire dans le serveur. Un unique acquittement peut être transmis par le terminal au serveur pour signaler la disponibilité de l'application installée dans le terminal pour être exécutée.

Le moyen gestionnaire analyse un descripteur de l'application qui a au moins un identificateur de la deuxième partie d'application formatée et qui est contenu dans le message d'application construit dans le serveur. Le moyen gestionnaire analyse alors le descripteur dans le message d'application reçu par le terminal afin que la deuxième partie d'application soit extraite du message d'application en fonction de l'identificateur dans le descripteur analysé. Le moyen chargeur est ensuite activé par le moyen gestionnaire pour charger la deuxième partie d'application dans la carte. Le terminal gère ainsi lui-même le chargement de la deuxième partie d'application dans la carte en synchronisme avec l'installation de la première partie d'application dans le terminal.

Le téléchargement de l'application vers le terminal utilise selon l'invention un chemin de transmission existant quel que soit le type de terminal qui peut être un terminal radiotéléphonique mobile, un terminal bancaire, un ordinateur personnel, etc. En particulier, lorsque le terminal est un terminal radiotéléphonique mobile, toute l'application est transmise à travers un canal de trafic de l'interface radio entre le terminal et une station de hase du réseau de radiotéléphonie, c'est-à-dire avec un débit nettement plus élevé qu'au moyen de messages courts selon la technique antérieure.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est un bloc-diagramme schématique entre un serveur d'application et un terminal avec une carte à puce selon la technique antérieure déjà commentée ;
- la figure 2 est un bloc-diagramme schématique d'un système de télécommunications entre un serveur d'application et un terminal avec une carte à puce selon la réalisation préférée de l'invention dans laquelle le terminal est un terminal radiotéléphonique mobile ;
- la figure 3 est un graphe montrant la composition d'un message d'application transmis par le serveur au terminal, selon l'invention ; et
- la figure 4 est un algorithme du procédé de chargement d'application à deux parties selon l'invention.

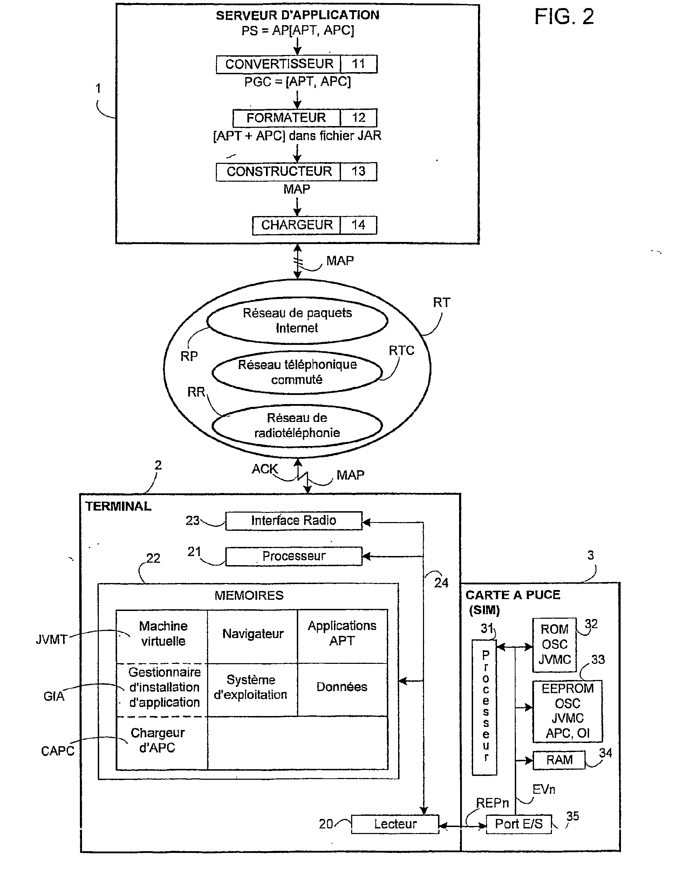

La réalisation préférée de l'invention décrite ci-après en référence à la figure 2 concerne à titre d'exemple le chargement d'une application depuis un serveur d'application 1 dans un terminal 2 du type terminal radiotéléphonique mobile doté d'une carte à puce 3.

Dans les trois entités 1, 2 et 3 sont représentés à la figure 2 des blocs fonctionnels assurant des fonctions ayant un lien avec l'invention et pouvant correspondre à des modules logiciels et/ou matériels.

Le terminal 2 est inclus dans un réseau de radiotéléphonie cellulaire numérique RR par exemple du type GSM ou UMTS. Plus précisément, le terminal 2 est relié au serveur 1 à travers un réseau de télécommunications comprenant classiquement un réseau de paquets RP tel que le réseau internet, un réseau téléphonique commuté RTC et le réseau de radiotéléphonie RR. La carte à puce 3 constitue un module d'identité amovible du terminal 2 connu sous l'appellation "carte SIM" (Subscriber Identity Module). En variante, la carte à puce 3 peut être une carte à puce additionnelle à la carte SIM.

Selon d'autres variantes, le terminal peut être un ordinateur électronique personnel (PC), ou un terminal bancaire, ou un terminal point de vente, ou un assistant numérique personnel (PDA), ou un dispositif portable de transmission de messages, etc. En association avec ces divers types de terminal, la carte à puce 3 peut être un objet électronique portable tel qu'une carte de débit ou crédit, un porte-monnaie électronique, une carte à puce additionnelle ou tout autre dispositif électronique petit ou miniature.

En général, le terminal 2 contient en tant que périphérique un lecteur 20 dans lequel la carte à puce 3 avec ou sans contact électrique est insérée au moins partiellement.

Le serveur d'application 1 constitue un site internet appartenant par exemple à l'éditeur de la carte à puce 3 ou bien à un éditeur qui édite des applications à télécharger dans des cartes à puce.

Un programme source PS correspondant à une application AP dont une première partie APT qui peut être vide est à télécharger dans le terminal 2 et dont une deuxième partie APC est à téléchargér dans la carte à puce 3 a été écrit initialement dans un langage de haut niveau du type orienté objet tel que le langage Java. Comme on le verra dans la suite, le terminal 2 et la carte à puce 3 contiennent respectivement des moyens d'exécution virtuels tels qu'une machine virtuelle Java (marque enregistrée) JVMT pour exécuter la partie d'application APT et une machine virtuelle Java Card (marque enregistrée) JVMC pour exécuter la partie d'application APC. D'une manière connue, le programme source PS est converti dans un convertisseur 11 du serveur 1 en un langage intermédiaire, appelé également pseudo-code, composé de mots d'instructions formé par des octets appelés bytecodes, qui sont prêts à être exécutés par les machines virtuelles JVMT et JVMC implémentées dans le terminal 2 et la carte à puce 3. Le programme compilé PGC produit par le convertisseur 11 contient la première partie d'application APT compilée et la deuxième partie d'application APC compilée qui correspondent à celles contenues dans le programme source PS et fournies par un développeur de l'éditeur d'application.

En variante, le convertisseur 11 est implémenté à l'extérieur du serveur 1.

Chaque partie d'application APT (.class) et APC (.cap) regroupe un ensemble de composants constituant des fichiers pouvant correspondre chacun à une classe d'objet, une méthode, un répertoire, un en-tête, un descripteur, etc.

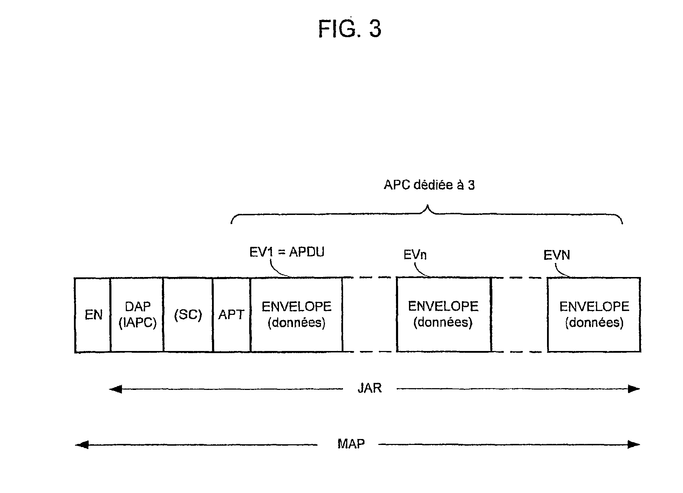

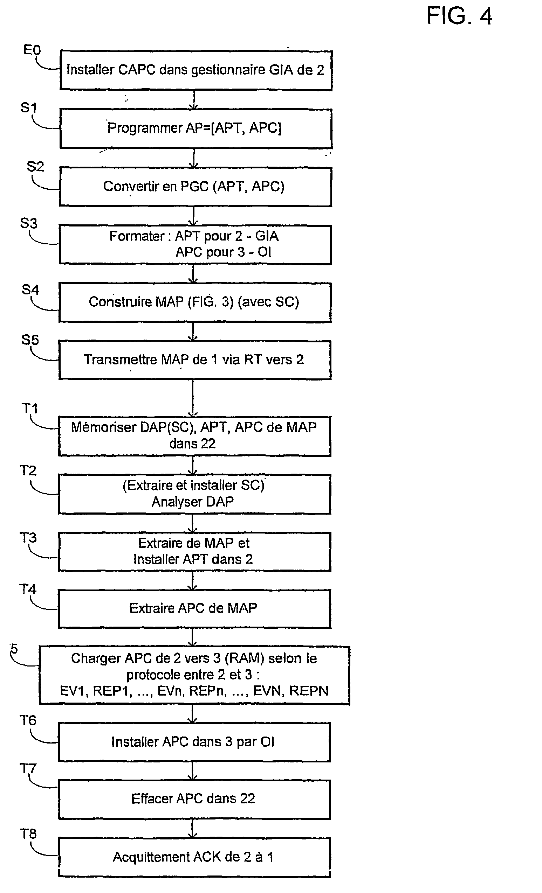

En particulier, comme montré à la figure 3, la deuxième partie d'application APC dédiée à la carte à puce 3 est segmentée en des commandes EV1 à EVN du type "ENVELOPE" qui sont concaténées et qui contiennent des données relatives à la deuxième partie d'application APC et directement chargeables dans la carte à puce 3. Les commandes EV1 à EVN sont compatibles avec un protocole de communication entre le terminal 2 et la carte à puce 3, typiquement un protocole asynchrone à l'alternat, et sont propres à transférer les données de la deuxième partie d'application APC du terminal 2 à la carte à puce 3 sans que le terminal 2 les interprète. Les données dans les commandes EV1 à EVN sont donc directement interprétables par la machine virtuelle JVMC implémentée dans la carte à puce 3, de manière analogue à un message court reçu par un terminal selon la technique antérieure et transmettant directement à la carte à puce une commande "ENVELOPE (SMS-PP DOWNLOAD)".

Dans le serveur 1, un formateur 12 formate la deuxième partie d'application APC en une succession de commandes "ENVELOPE" EV1 à EVN.

Le serveur d'application 1 comprend également un constructeur de messages d'application 13 et un chargeur 14. Le constructeur 13 construit un message d'application MAP comme montré à la figure 3. Le message MAP comprend un en-tête EN, un descripteur d'application DAP, la première partie d'application APT et la deuxième partie d'application APC avec les commandes concaténées EV1 à EVN. Le descripteur DAP contient en particulier un identificateur IAPC indiquant la position du début de la deuxième partie d'application APC dans le champ de données du message MAP succédant au descripteur DAP. L'identificateur IAPC servira à extraire la deuxième partie d'application APC du message MAP mémorisé dans le terminal 2. Le descripteur DAP constitue un fichier JAD (Java Application Descriptor) et l'ensemble des données [DAP(IAPC), APT, APC] constitue un fichier JAR (Java Application Repository) selon la description de la machine virtuelle Java Card. Le message MAP ainsi produit par le constructeur 13 contient ainsi une applet à transmettre au terminal 2 sous la commande du chargeur 14 à travers le réseau de télécommunications RT. Le chargeur 14 adapte le message MAP aux protocoles de transport tel que HTTP (HyperText Transfer Protocol) et de réseau (Internet Protocol) du réseau de paquets RP auquel est connecté le serveur 1.

Le terminal 2 du type radiotéléphonique mobile comprend classiquement, outre le lecteur de carte à puce 20, un processeur 21, des mémoires 22 et une interface radio 23 reliée par un bus 24. Les mémoires 22 regroupent diverses mémoires telles qu'une mémoire morte, une mémoire non volatile EEPROM et une mémoire RAM. Lorsque le terminal est par exemple un ordinateur personnel, les mémoires 22 comprennent un disque dur. Naturellement, le terminal 2 comprend d'autres périphériques à l'interface homme-machine avec le processeur 22 tels qu'un clavier, un afficheur graphique, au moins un haut-parleur, un microphone, etc. L'interface 23 transpose en fréquence, convertit numériquement, démodule et décode des messages reçus via le réseau fixe dans le réseau RR.

Les mémoires 22 dans le terminal 2 contiennent notamment un système d'exploitation, la machine virtuelle Java JVMT, un navigateur, et diverses applications et données.

En particulier, dans la mémoire non volatile des mémoires 22 du terminal 2 est implémenté un gestionnaire d'installation d'application GIA programmé en langage Java et exécutable dans le terminal 2. Le gestionnaire GIA sert à installer diverses applications dans les mémoires 22 du terminal et à lancer leurs exécutions, et en particulier à installer et lancer la première partie APT d'une application déployée AP selon l'invention. Le gestionnaire GIA peut être inclus dans la machine virtuelle JVMT.

Le gestionnaire GIA distingue dans un message d'application reçu MAP la première partie d'application APT destinée au terminal 2 par rapport à la deuxième partie d'application APC destinée à la carte à puce 3 sans nécessiter une interprétation des données contenues dans les commandes EV1 à EVN par la machine virtuelle JVMT.

En liaison avec le gestionnaire GIA, un chargeur CAPC pour charger la deuxième partie d'application APC depuis le terminal dans la carte à puce est implémenté, selon l'invention, également sous forme de module logiciel dans les mémoires 22 du terminal 2. Le chargeur CAPC crée un lien entre la machine virtuelle JVMT et le gestionnaire GIA implémentés dans le terminal 2 et la machine virtuelle JVMC et un outil d'installation d'application OI implémentés dans la carte à puce 3 à travers le protocole de communication prédéterminé ayant des unités de données de protocole (PDU) constituées par des commandes EV1 à EVN et leurs réponses RES1 à RESN échangées entre le terminal 2 et la carte à puce 3.

La carte à puce 3 qui est une carte amovible SIM selon la réalisation préférée comprend classiquement sous forme intégrée un microprocesseur 31, une mémoire non réinscriptible 32 du type ROM, une mémoire non volatile 33 du type EEPROM et une mémoire 34 du type RAM destinée essentiellement à échanger des données avec le terminal 2 à travers un port d'entrée/sortie 35. Les mémoires 32 et 33 contiennent les codes et les données d'un système d'exploitation OSC et de la machine virtuelle JVMC conforme à la spécification Java Card. La mémoire non volatile 33 contient diverses applications et est destinée à recevoir la deuxième partie d'application APC contenue dans un message d'application MAP transmis par le serveur 1 à travers le terminal 2 et téléchargée par le lecteur 20 à travers le port 35 et la mémoire RAM 34. La mémoire 33 contient également l'outil d'installation OI pour installer des deuxièmes parties d'application APC selon l'invention.

En se référant maintenant à la figure 4, le procédé de chargement d'une application AP comprenant une première partie APT destinée au terminal 2 et une deuxième partie APC destinée à la carte à puce 3 comprend essentiellement des étapes S1 à S5 exécutées dans le serveur 1 et des étapes T1 à T8 exécutées principalement dans le terminal 2.

On suppose qu'à une étape initiale EO précédent au moins les étapes T1 à T8, le chargeur de deuxième partie d'application CAPC selon l'invention a été installé sous la forme d'un module logiciel dans les mémoires 22 par exemple depuis un serveur autre que le serveur 1.

A l'étape S1, un développeur de l'éditeur d'application gérant le serveur 1 écrit l'application AP en langage source de haut niveau de manière à ce qu'elle contienne deux parties APT et APC en langages Java et Java Card respectivement destinées au terminal 2 et à la carte à puce 3. Le convertisseur 11 convertit l'application AP = [APT, APC] en un programme compilé PGC[API, APC] en langage intermédiaire (pseudo-code). En variante, les étapes S1 et S2 sont réalisées à l'extérieur du serveur 1 et le programme compilé PGC est chargé dans le serveur.

Puis les étapes S3, S4 et S5 sont respectivement effectuées par le formateur 12, le constructeur 13 et le chargeur 14. A l'étape S3, le formateur 12 formate les parties d'application compilées APT et APC pour qu'elles soient respectivement compatibles avec le gestionnaire d'installation GIA dans le terminal 2 et l'outil d'installation OI dans la carte à puce 3. En particulier, la deuxième partie d'application APC est segmentée en des unités de données de protocole EV1 à EVN, comme montré à la figure 3, qui sont conformes au protocole de communication entre le terminal 2 et la carte à puce 3 au niveau de la liaison entre le lecteur 20 et le port d'entrée/sortie 35. Typiquement, les commandes EV1 à EVN incluses dans la partie APC sont formatées comme des messages courts selon la norme GSM. A l'étape S4, le constructeur 13 ajoute un en-tête de message EN, un descripteur d'application DAP contenant au moins l'identificateur de deuxième partie d'application IAPC et précédant les parties d'application APT et APC concaténées. Le message ainsi construit MAP contient un fichier du type JAR incluant les champs DAP, APT et APC.

Puis à l'étape S5 le chargeur 14 transmet le message d'application construit MAP vers le terminal 2 à travers le réseau de télécommunications RT, c'est-à-dire à travers un unique canal de transmission, et non séparément en deux parties à travers deux chemins de transmission distincts et désynchronisées RP-RTC-RR et RP-SMC-RI-RR selon la technique antérieure montrée à la figure 1.

A la réception du message MAP dans le terminal 2, le processeur 22 commande l'écriture des données DAP, APT et APC contenues dans le message MAP dans la mémoire RAM des mémoires 22, à l'étape T1.

A l'étape T2, le descripteur DAP extrait du message reçu MAP et mémorisé dans les mémoires 22 est analysé notamment par le gestionnaire d'installation d'application GIA qui est lancé. Grâce à l'analyse.du descripteur DAP sont, repérées les parties d'application APT et APC dans le champ de données du message MAP. Tout d'abord à l'étape T3, le gestionnaire d'installation GIA via le processeur 21 lit la première partie d'application APT et l'extrait du message MAP dans les mémoires 22 pour l'installer particulièrement dans la mémoire non volatile de celles-ci. La partie APT ainsi installée pourra être exécutée par la machine virtuelle JVMT après le chargement de la deuxième partie APC dans la carte à puce 3. Naturellement, si la partie APT est vide, l'étape T3 n'est pas exécutée.

Le gestionnaire GIA active le chargeur CAPC qui extrait la deuxième partie d'application APC du message MAP écrit dans les mémoires 22, à l'étape T4, en ignorant le contenu de la partie APC et particulièrement le contenu des unités de données de protocole EV1 à EVN. Le chargeur CAPC repère la partie APC dans le message MAP au moyen de l'identificateur IAPC lu dans le descripteur d'application DAP analysé à l'étape T2. La partie APC a été correctement formatée par le formateur 12 pour être directement exploitée dans la carte à puce 3.

Puis le chargeur CAPC initie un échange avec la carte à puce 3 pour charger la deuxième partie d'application extraite APC depuis les mémoires 22 à travers le lecteur 20 et le port d'entrée/sortie 35 dans la mémoire RAM 34 de la carte à puce 3. La deuxième partie d'application APC est segmentée en des commandes EV1 à EVN de manière à les charger successivement dans la carte à puce 3, à l'étape T5. Pour chaque commande "ENVELOPE" EVn transmise par le lecteur 20, avec 1 ≤ n ≤ N, le processeur 31 dans la carte à puce 3 en liaison avec l'outil d'installation OI retourne une réponse respective REPn selon le protocole prédéterminé d'échange de commande et de réponse entre le lecteur 2 et la carte à puce 3. La réponse REPn est analysée par le chargeur CAPC. Si la réponse REPn contient un acquittement positif, le chargeur CAPC continue le processus de chargement de la deuxième partie d'application APC en transmettant la commande suivante EV(n + 1) suivante, et ainsi de suite. Dans le cas contraire, la réponse REPn contient une erreur que le chargeur CAPC signale au gestionnaire d'installation GIA qui la retransmet sous la forme d'un message d'erreur au serveur d'application 1. Le chargement de la deuxième partie d'application au fur et à mesure de la transmission des commandes EV1 à EVN est complètement transparent dans le terminal 2, c'est-à-dire n'engendre aucun affichage de message correspondant ou de message d'attente dans le terminal 2. Au fur et à mesure de la transmission des commandes EV1 à EVN, l'outil d'installation OI installe progressivement la deuxième partie d'application APC dans la carte à puce 3 en transférant les enveloppes EV1 à EVN de la mémoire RAM 34 à la mémoire EEPROM 33, à l'étape T6.

De préférence, après réception de la dernière réponse REPN de la carte à puce 3 à la dernière commande EVN, le chargeur CAPC efface la deuxième partie d'application APC reçue avec le message MAP dans les mémoires 22 à l'étape T7. Puis le gestionnaire d'installation d'application GIA commande dans le terminal 2 la transmission d'un message d'acquittement ACK au serveur 1 via le réseau RT dès que le chargeur CAPC a terminé le chargement de la deuxième partie d'application APC dans la carte à puce 3, c'est-à-dire après les étapes T5 et T6 et optionnellement l'étape T7.

En variante, au lieu que le chargeur de deuxième partie d'application CAPC soit installé préalablement sous la forme d'un module logiciel dans le terminal 2 par d'autres moyens électroniques que le serveur d'application 1, le module logiciel incluant le chargeur CAPC est préalablement introduit dans le message MAP par le constructeur 13 sous la forme d'un script SC, comme indiqué entre parenthèses dans un champ du message MAP dans la figure 3 et à l'étape S4 dans la figure 4. Au cours de l'étape S4 de construction du message MAP, le constructeur 13 ajoute le script SC après le descripteur DAP qui est modifié en conséquence. A l'étape T2, le gestionnaire GIA extrait le script SC dans le message d'application MAP reçu par le terminal 2 de manière à installer le script SC dans la mémoire non volatile des mémoires 22. Le script SC est ensuite lancé par le gestionnaire GIA pour notamment extraire la deuxième partie d'application APC et la charger dans la carte à puce 3 aux étapes T4 et T5.

Selon une autre variante, le message d'application MAP ne contient pas le script SC. Une adresse de script URL (Uniform Resource Locator) désignant un emplacement dans un serveur ayant stocké le script SC est introduite au cours de la construction S4 du message d'application MAP à transmettre au terminal 2. A l'étape T2, le gestionnaire GIA dans le terminal 2 extrait l'adresse de script du message reçu et mémorisé MAP et requiert auprès du serveur désigné par l'adresse extraite le téléchargement du script SC dans les mémoires 22 du terminal 2. Le script SC est ensuite lancé par le gestionnaire GIA pour notamment extraire la deuxième partie d'application APC et la charger dans la carte à puce 3 aux étapes T4 et T5.

## Revendications

1. Procédé pour charger depuis un serveur (1) une application (AP) incluant une première partie (APT) destinée à un terminal (2) doté d'un moyen gestionnaire d'application (GIA) et une deuxième partie (APC) destinée à une carte à puce (3) accueillie dans le terminal, comprenant les étapes de :
- fournir (EO) au terminal (2) un moyen de chargement (CAPC) pour charger la deuxième partie d'application dans la carte à puce (3),
- formater (S3) dans le serveur (1) la deuxième partie d'application (APC) pour qu'elle soit compatible avec un protocole de communication entre le terminal (2) et la carte à puce (3),
- construire (S4) dans le serveur (1) un message d'application contenant la première partie d'application (APT) et la deuxième partie d'application formatée (APC),
- transmettre (S5) le message d'application (MAP) depuis le serveur (1) vers le terminal (2) à travers un unique canal de transmission (RT),
- installer (T3) dans le terminal (2) la première partie d'application (APT) extraite du message d'application (MAP) par le moyen gestionnaire, et
- charger (T4-T5-T6) la deuxième partie d'application (APC) extraite du message d'application depuis le terminal (2) dans la carte à puce (3) selon le protocole de communication prédéterminé sous la commande du moyen de chargement (CAPC).

2. Procédé conforme à la revendication 1, selon lequel le message d'application (MAP) construit contient un descripteur (DAP) de l'application (AP) avec au moins un identificateur (IAPC) de la deuxième partie d'application (APC), et le moyen gestionnaire (GIA) analyse le descripteur (DAP) dans le message d'application (MAP) reçu par le terminal (2) afin que la deuxième partie d'application (APC) soit extraite du message d'application (MAP) en fonction de l'identificateur (IAPC) dans le descripteur analysé (DAP).

3. Procédé conforme à la revendication 1 ou 2, selon lequel le moyen de chargement (CAPC) est installé préalablement sous la forme d'un module logiciel dans le terminal (2).

4. Procédé conforme à la revendication 1 ou 2, comprenant l'introduction du moyen de chargement (CAPC) sous la forme d'un script (SC) au cours de la construction (S4) du message d'application (MAP) à transmettre depuis le serveur (1) au terminal (2) et l'installation (T2) du moyen de chargement (CAPC) par extraction du script (SC) dans le message d'application (MAP) reçu par le terminal avant le chargement (T4-T5-T6) de la deuxième partie d'application (APC).

5. Procédé conforme à la revendication 1 ou 2, comprenant l'introduction d'une adresse d'un script (SC) de chargement (CAPC) au cours de la construction (S4) du message d'application (MAP) à transmettre depuis le serveur (1) au terminal (2) et l'installation (T2) du moyen de chargement (CAPC) par extraction de l'adresse de script dans le message d'application (MAP) reçu par le terminal et un téléchargement du script depuis l'adresse extraite dans le terminal avant le chargement (T4-T5-T6) de la deuxième partie d'application (APC).

6. Procédé conforme à l'une quelconque des revendications 1 à 5, comprenant après l'étape de charger (T5-T6) la deuxième partie d'application (APC), un effacement (T7) de la deuxième partie d'application dans le terminal (2).

7. Procédé conforme à l'une quelconque des revendications 1 à 6, comprenant après l'étape de charger (T5-T6) la deuxième partie d'application (APC), une transmission (T8) d'un message d'acquittement (ACK) depuis le terminal (2) au serveur (1) dès que le moyen gestionnaire (GIA) a terminé le chargement de la deuxième partie d'application (APC) dans la carte à puce (3).

8. Procédé conforme à l'une quelconque des revendications 1 à 7, selon lequel la deuxième partie d'application (APC) est segmentée en des unités de protocole (EV1-EVN) qui sont conformes au protocole de communication et qui sont chargées successivement dans la carte à puce (3) sous la commande du moyen de chargement (CAPC), la carte à puce transmettant une réponse d'acquittement (REPn) après le chargement (T5) de chaque unité de protocole (EVn).

9. Procédé conforme à l'une quelconque des revendications 1 à 8, selon lequel les première et deuxième parties d'application (APT, APC) sont écrites en des langages de haut niveau et sont converties en un langage intermédiaire interprétable respectivement par des moyens d'exécution virtuels (JVMT, JVMC) respectivement implémentés dans le terminal (2) et la carte à puce (3).

10. Procédé conforme à l'une quelconque des revendications 1 à 9, selon lequel le terminal (2) est un terminal radiotéléphonique mobile.

## Claims

1. A method for loading from a server (1) an application (AP) including a first part (APT) intended for a terminal (2) provided with an application management means (GIA) and a second part (APC) intended for a chip card (3) accepted in the terminal, comprising the steps of:
- supplying (EO) to the terminal (2) a loading means (CAPC) for loading the second application part in the chip card (3),
- formatting (S3) in the server (1) the second application part (APC) so that it is compatible with a protocol for communication between the terminal (2) and the chip card (3),
- constructing (S4) in the server (1) an application message (MAP) containing the first application part (APT) and the second formatted application part (APC),
- transmitting (S5) the application message (MAP) from the server (1) to the terminal (2) over a single transmission channel (RT),
- installing (T3) in the terminal (2) the first application part (APT) extracted from the application message (MAP) via the management means, and
- loading (T4-T5-T6) the second application part (APC) extracted from the application message from the terminal (2) into the chip card (3) according to the predetermined communication protocol under the control of the loading means (CAPC).

2. A method according to Claim 1, according to which the constructed application message (MAP) contains a descriptor (DAP) of the application (AP) with at least one identifier (IAPC) of the second application part (APC); and the management means (GIA) analyses the descriptor (DAP) in the application message (MAP) received by the terminal (2) so that the second application part (APC) is extracted from the application message (MAP) according to the identifier (IAPC) in the analysed descriptor (DAP).

3. A method according to Claim 1 or 2, according to which the loading means (CAPC) is installed in advance in the form of a software module in the terminal (2).

4. A method according to Claim 1 or 2, comprising the introduction of the loading means (CAPC) in the form a script (SC) during the construction (S4) of the application message (MAP) to be transmitted from the server (1) to the terminal (2) and the installation (T2) of the loading means (CAPC) by extraction of the script (SC) in the application message (MAP) received by the terminal before the loading (T4-T5-T6) of the second application part (APC).

5. A method according to Claim 1 or 2, comprising the introduction of an address of a loading (CAPC) script (SC) during the construction (S4) of the application message (MAP) to be transmitted from the server (1) to the terminal (2) and the installation (T2) of the loading means (CAPC) by extraction of the script address in the application message (MAP) received by the terminal and a downloading of the script from the extracted address in the terminal before the loading (T4-T5-T5) of the second application part (APC).

6. A method according to any one of Claims 1 to 5, comprising, after the step of loading (T5-T6) the second application part (APC), a deletion (T7) of the second application part in the terminal (2).

7. A method according to any one of Claims 1 to 6, comprising, after the step of loading (T5-T6) the second application part (APC), a transmission (T8) of an acknowledgement message (ACK) from the terminal (2) to the server (1) as soon as the management means (GIA) has finished the loading of the second application (APC) in the chip card (3).

8. A method according to any one of Claims 1 to 7, according to which the second application part (APC) is segmented into protocol units (EV1-EVN) which are in accordance with the communication protocol and which are loaded successively in the chip card (3) under the control of the loading means (CAPC), the chip card transmitting an acknowledgement response (REPn) after the loading (T5) of each protocol unit (EVn).

9. A method according to any one of Claims 1 to 8, according to which the first and second application parts (APT, APC) are written in high-level languages and are converted into an intermediate language that can be interpreted respectively by virtual execution means (JVMT, JVMC) respectively implemented in the terminal (2) and the chip card (3).

10. A method according to any one of Claims 1 to 9, according to which the terminal (2) is a mobile radiotelephone terminal.

## Patentansprüche

1. Verfahren zum Laden einer Anwendung (AP) von einem Server (1) aus mit einem für einen mit einem Verwaltungsmittel (GIA) bestückten Terminal (2) bestimmten ersten Teil (APT) und einem für eine im Terminal aufgenommene Chipkarte (3) bestimmten zweiten Teil (APC) mit den folgenden Stufen:
- Lieferung (EO) eines Lademittels (CAPC) an das Terminal (2), um den zweiten Anwendungsteil in die Chipkarte (3) zu laden,
- Formatieren des zweiten Anwendungsteils (APC) im Server (1), damit Ersterer mit einem Kommunikationsprotokoll zwischen dem Terminal (2) und der Chipkarte (3) kompatibel ist,
- Aufbau (S4) einer den ersten Anwendungsteil (APT) und den zweiten formatierten Anwendungsteil (APC) enthaltenden Anwendungsmeldung,
- Übertragung (S5) der Anwendungsmeldung (MP) vom Server (1) aus auf das Terminal (2) über einen einzigen Übertragungskanal (RT),
- Installation (T3) des aus der Anwendungsmeldung (MAP) durch das Verwaltungsmittel extrahierten ersten Anwendungsteils (APT) auf das Terminal (2) und
- Laden (T4-T5-T6) des aus der Anwendungsmeldung vom Terminal (2) extrahierten zweiten Anwendungsteils (APC) in die Chipkarte (3) gemäß dem vorbestimmten Kommunikationsprotokoll unter der Steuerung des Lademittels (CAPC).

2. Verfahren gemäß Anspruch 1, gemäß dem die aufgebaute Anwendungsmeldung (MAP) einen Beschreiber (DAP) der Anwendung (AP) mit wenigstens einem Identifizierer (IAPC) des zweiten Anwendungsteils (APC) enthält und das Verwaltungsmittel (GIA) den Beschreiber (DAP) in der vom Terminal (2) empfangenen Anwendungsmeldung (MAP) analysiert, damit der zweite Anwendungsteil (APC) aus der Anwendungsmeldung (MAP) in Abhängigkeit des Identifizierers (IAPC) im analysierten Beschreiber (DAP) extrahiert wird.

3. Verfahren gemäß Anspruch 1 oder 2, gemäß dem das Lademittel (CAPC) zuvor in Form eines Software-Moduls im Terminal (2) installiert wird.

4. Verfahren gemäß Anspruch 1 oder 2, umfassend die Einführung des Lademittels (CAPC) in Form eines Skripts (SC) im Verlauf des Aufbaus (S4) der vom Server (1) auf das Terminal (2) zu übertragenden Anwendungsmeldung (MAP) und die Installation (TS) des Lademittels (CAPC) durch Extraktion des Skripts (SC) in die vom Terminal vor dem Laden (T4-T5-T6) des zweiten Anwendungsteils (APC) empfangenen Anwendungsmeldung (MAP).

5. Verfahren gemäß Anspruch 1 oder 2, umfassend die Einführung einer Adresse eines Skripts (SC) für das Laden (CAPC) im Verlauf des Aufbaus (S4) der vom Server (1) auf das Terminal (2) zu übertragenden Anwendungsmeldung (MAP) und die Installation (T2) des Lademittels (CAPC) durch die Extraktion der Skriptadresse in die vom Terminal empfangene Anwendungsmeldung (MAP) und ein Herunterladen des Skripts von der im Terminal vor dem Laden (T4-T5-T6) des zweiten Anwendungsteils (APC) extrahierten Adresse.

6. Verfahren gemäß Anspruch 1 bis 5, umfassend nach der Ladestufe (T5-T6) den zweiten Anwendungsteil (APC), ein Löschen (T7) des zweiten Anwendungsteils im Terminal (2).

7. Verfahren gemäß Anspruch 1 bis 6, umfassend nach der Ladestufe (T5-T6) den zweiten Anwendungsteil (APC), eine Übertragung (T8) einer Empfangsmeldung (ACK) ausgehend vom Terminal (2) an den Server (1), sobald das Verwaltungsmittel (GIA) das Laden des zweiten Anwendungsteils (APC) in die Chipkarte (3) beendet hat.

8. Verfahren gemäß Anspruch 1 bis 7, nach dem der zweite Anwendungsteil (APC) in Protokolleinheiten (EV1-EVN) segmentiert ist, die dem Kommunikationsprotokoll entsprechen und die sukzessive unter der Steuerung des Lademittels (CAPC) in die Chipkarte (3) geladen werden, wobei die Chipkarte eine Empfangsantwort (REPn) nach dem Laden (T5) jeder Protokolleinheit (EVn) überträgt.

9. Verfahren gemäß Anspruch 1 bis 8, gemäß dem die ersten und zweiten Anwendungsteile (APT, APC) in Sprachen hohen Niveaus geschrieben sind und in eine jeweils von den jeweils im Terminal (2) und der Chipkarte (3) implementierten virtuellen Ausführungsmitteln (JVMT, JVMC) interpretierbare Sprache konvertiert werden.

10. Verfahren gemäß Anspruch 1 bis 9, nach dem das Terminal ein mobiles Funktelefonterminal ist.
